# EUROPEAN PATENT APPLICATION

(11) **EP 3 890 346 A1**
(43) Date of publication of application: **06.10.2021**
(21) Application number: 19906292.8
(22) Date of filing: 20.12.2019
(51) Int. Cl.: H04R 1/20

(54) **SOUND BOX EXTENDING AND RETRACTING STRUCTURE FOR FLAT DISPLAY DEVICE AND FLAT DISPLAY DEVICE**

(30) Priority: 27.12.2018 CN 201811611286
(71) Applicant: Oneplus Technology (Shenzhen) Co., Ltd., Shenzhen, Guangdong 518000 (CN)
(72) Inventor: ZHANG, Yong, Shenzhen, Guangdong 518042 (CN); HUANG, Shunming, Shenzhen, Guangdong 518042 (CN); YU, Yajun, Shenzhen, Guangdong 518042 (CN); HU, Jin, Shenzhen, Guangdong 518042 (CN); YANG, Yong, Shenzhen, Guangdong 518042 (CN)
(74) Representative: Manitz Finsterwald Patent- und Rechtsanwaltspartnerschaft mbB
(86) International application number: PCT/CN2019/127148
(87) International publication number: WO 2020/135271

(57) **Abstract**

The present application relates to a flat display device and a sound box extending and retracting structure thereof. The sound box extending and retracting structure comprises: a guide rail system, provided on a body of a flat display device, the guide rail system comprising a first drive guide rail and a second drive guide rail which are connected to each other, and the guiding directions of the first drive guide rail and the second drive guide rail being provided at an angle; and a trolley system, the travelling track of which is constrained by the guide rail system, the trolley system comprising a trolley support, a sound box connecting support fixedly connected to the trolley support, a drive motor mounted on the trolley support, and a drive wheel driven to rotate by means of an output end of the drive motor, the drive wheel driving the trolley support to travel along the path defined by the first drive guide rail and the second drive guide rail. The sound box extending and retracting structure enables a sound box to first move vertically downwards and then move forwards, so that the sound is emitted forward, and the required space is small.

## Description

### CROSS-REFERENCE TO RELATED APPLICATION

The present application is based upon and claims priority to Chinese Patent Application No. 201811611286.1, filed on December 27, 2018, the disclosure of which is hereby incorporated by reference in its entirety.

### TECHNICAL FIELD

The present application relates to the field of sound boxes of flat display devices, and in particular to a sound box extending and retracting structure of a flat display device and a flat display device having the extending and retracting structure.

### BACKGROUND

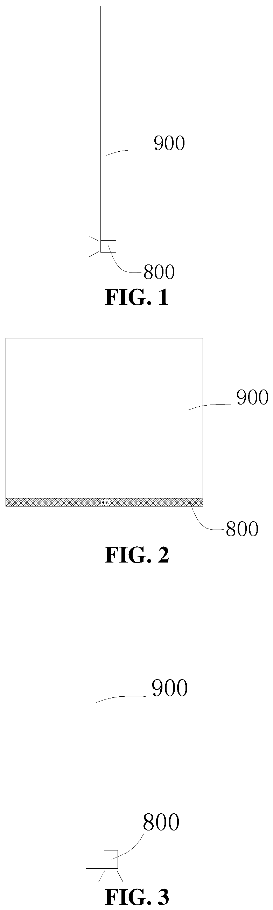

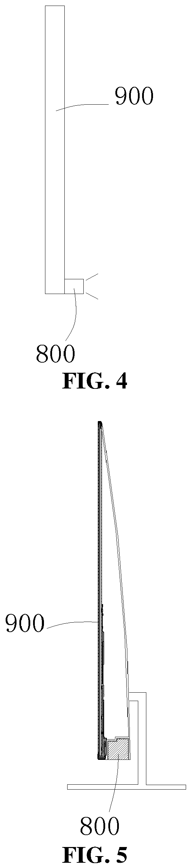

For a conventional flat display device, such as a liquid crystal display television and an organic light emitting diode television, a sound box sounding mode generally includes a forward sounding mode as shown in FIGS. 1 and 2 where a sound box 800 is arranged below a screen 900, a downward sounding mode as shown in FIG. 3, and a backward sounding mode as shown in FIG. 4. In FIGS. 3 and 4, the sound box 800 is arranged behind the screen 900. Users feel that the forward sounding mode, the downward sounding mode and the backward sounding mode descend sequentially in sound quality. Therefore, it is generally preferable to set the sound box to be able to sound forwards.

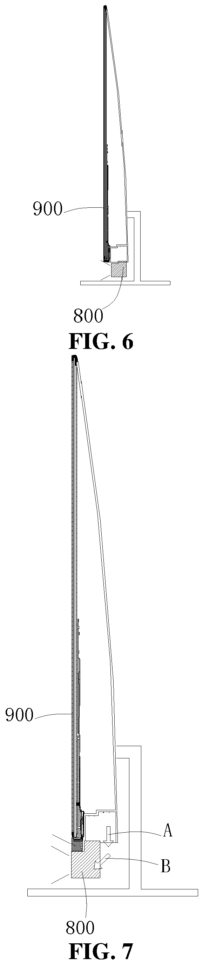

According to the scheme of forward sounding, the sound box occupies a large space below the screen, and a simple appearance cannot be achieved. To solve this problem, as shown in FIGS. 5 and 6, an up-down reciprocating extending and retracting structure is generally adopted in the conventional art. However, the applicant has found that the extended sound box 800 has a large distance from the front-most face of the screen 900, and thus the appearance effect is not good. As shown in FIG. 7, another reciprocating extending and retracting sound box adopted in the conventional art is that the sound box firstly moves vertically downwards (arrow A) and then moves obliquely forwards (arrow B). However, the applicant has found that more space is needed for the movement of the sound box with this structure, so that a lower frame of a device is wider than that of a common display device. Thus, the purpose of simple and neat appearance cannot be achieved.

It is to be noted that the contents of the above-mentioned background are used for introducing the technical problem to be solved by the present application, and do not represent the applicant's recognition that the above-mentioned contents belong to the conventional art.

### SUMMARY

Based on this, it is necessary to provide a sound box extending and retracting structure of a flat display device, aiming at the problem of large space for movement of the conventional extending and retracting sound box, which affects the device appearance. Meanwhile, a flat display device having the sound box extending and retracting structure is also provided.

A sound box extending and retracting structure may include a guide rail system and a trolley system.

The guide rail system is arranged on a body of the flat display device and includes a first drive guide rail and a second drive guide rail which are connected with each other. A guide direction of the first drive guide rail and a guide direction of the second drive guide rail are perpendicular to each other.

A traveling track of the trolley system is constrained by the guide rail system. The trolley system includes a trolley support, a sound box connecting support fixedly connected to the trolley support, a drive motor installed on the trolley support, and a drive wheel driven to rotate by an output end of the drive motor. The drive wheel drives the trolley support to travel along a path defined by the first drive guide rail and the second drive guide rail.

When the sound box extending and retracting structure is installed and used in the flat display device, as long as the guide direction of the first drive guide rail is approximately parallel to a screen of the device, the sound box may move vertically downwards first and then forwards, and forward sounding can be realized.

In one of the embodiments, the drive wheel may be a drive gear, and both the first drive guide rail and the second drive guide rail may be racks. Due to the adoption of a gear transmission mechanism, the space required by forward movement of the sound box is smaller than that of the oblique forward movement mode in the traditional technology. In addition, compared with an up-down reciprocating extending and retracting structure, the above-mentioned sound box extending and retracting structure has the advantages that the sound box can be adjusted to a position close to the front of the screen while sounding forwards, and the appearance is simple and neat.

In one of the embodiments, the guide direction of the first drive guide rail and the guide direction of the second drive guide rail may be perpendicular to each other, or the first drive guide rail and the second drive guide rail may jointly form an annular guide path.

In one of the embodiments, an end of the drive shaft may be further provided with a limiting member, and the guide rail system may further include a limiting groove provided on the body and constraining a traveling track of the limiting member.

In one of the embodiments, the limiting member is a bearing.

In one of the embodiments, a driving gear may be fixed to the output end of the motor, the trolley system may further include a drive shaft rotatably installed on the trolley support, and a driven gear may be fixed to the drive shaft.

In one of the embodiments, the trolley system may further include a transition gear installed on the trolley support, and the driving gear may transmit a torque to the driven gear through the transition gear.

In one of the embodiments, an end of the drive shaft may be further provided with a limiting member, and the guide rail system may further include a limiting groove provided on the body and constraining a traveling track of the limiting member.

In one of the embodiments, the limiting member is a bearing.

In one of the embodiments, the trolley support may include a first support, a second support, and a plurality of middle connecting rods integrally connecting the first support with the second support, the drive shaft may include a first drive shaft and a second drive shaft which are arranged side by side, two ends of the first drive shaft may be installed on the first support and the second support respectively, two ends of the second drive shaft may be installed on the first support and the second support respectively, and the two ends of the first drive shaft and the two ends of the second drive shaft may be provided with respective drive wheels.

In one of the embodiments, the first drive guide rail and the second drive guide rail may be connected and transitioned to each other through an arc-shaped guide rail.

A flat display device may include the sound box extending and retracting structure. The guide direction of the first drive guide rail may be parallel to a screen of the flat display device, and the guide direction of the second drive guide rail may be perpendicular to the screen.

In one of the embodiments, the guide rail system may be installed inside a body of the flat display device, the sound box connecting support may be connected with a sound box, and the sound box can be extended out of and retracted into the body.

The flat display device is provided with the sound box extending and retracting structure, so that forward sounding can be realized, the required space is small, and the appearance is simple and neat.

### BRIEF DESCRIPTION OF THE DRAWINGS

FIG. 1 is a schematic side view of a flat display device capable of sounding forwards in the conventional art.
FIG. 2 is a schematic front view of a flat display device capable of sounding forwards in the conventional art.
FIG. 3 is a schematic side view of a flat display device capable of sounding downwards in the conventional art.
FIG. 4 is a schematic side view of a flat display device capable of sounding backwards in the conventional art.
FIG. 5 is a schematic side view of a flat display device having an up-down reciprocating extending and retracting sound box in the conventional art when the sound box is in a retracted state.
FIG. 6 is a schematic side view of a flat display device having an up-down reciprocating extending and retracting sound box in the conventional art when the sound box is in an extended state.
FIG. 7 is a schematic side view of a flat display device having another reciprocating extending and retracting sound box in the conventional art.
FIG. 8 is a schematic front view of a flat display device according to an embodiment of the present application when its sound box is in an extended state.
FIG. 9 is a schematic front view of a flat display device according to an embodiment of the present application when its sound box is in a retracted state.
FIG. 10 is a schematic side cross-sectional view of the flat display device of the embodiment shown in FIG. 9.
FIG. 11 is a schematic side cross-sectional view of the flat display device of the embodiment shown in FIG. 8.
FIGS. 12 and 13 are schematic views of rear structures of the flat display device of the embodiment shown in FIG. 9 from different angles respectively with a rear housing removed.
FIG. 14 is a schematic structure view of a trolley system in a sound box extending and retracting structure of a flat display device according to an embodiment of the present application.
FIG. 15 is a schematic planar view of a guide rail system in a sound box extending and retracting structure of a flat display device according to an embodiment of the present application.
FIG. 16 is a schematic structure view of the guide rail system of the embodiment shown in FIG. 15.

### DETAILED DESCRIPTION

In order to make the above objects, features and advantages of the present application become more apparent and easily understood, the specific implementations of the present application will be described in detail below with reference to the drawings. In the following description, numerous specific details are set forth in order to provide a thorough understanding of the present application. The present application may, however, be embodied in many other modes different from those described herein. Similar improvements may be made by those skilled in the art without departing from the idea of the present application, and therefore the present application is not limited to the specific embodiments disclosed below.

It is to be noted that when an element is referred to as being "fixed to" another element, it may be directly on another element or intervening elements may also be present. When an element is referred to as being "connected" to another element, it may be directly connected to another element or intervening elements may also be present.

Unless defined otherwise, all technical and scientific terms used herein have the same meaning as commonly understood by those of ordinary skill in the art to which the present application belongs. The terms used herein in the description of the present application are for the purpose of describing particular embodiments only and are not intended to be limiting of the present application. As used herein, the term "and/or" includes any and all combinations of one or more of the associated listed items.

The embodiments of the present application provide a sound box extending and retracting structure for a flat display device. A flat display device having the extending and retracting structure is also provided. The flat display device may be a liquid crystal display television, a plasma television, an organic light emitting diode television, a display, etc. The following detailed description is made in conjunction with the embodiments.

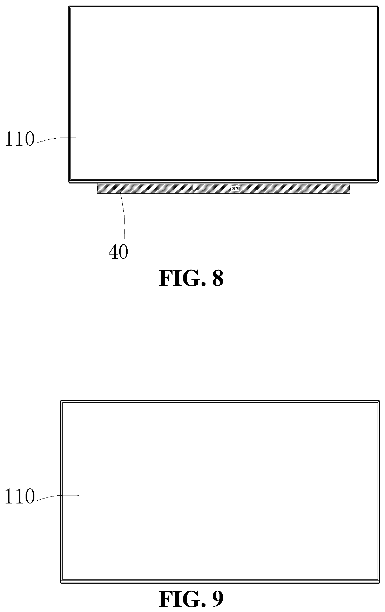

Referring to FIGS. 8 to 14, a flat display device according to an embodiment of the present application has a sound box extending and retracting structure capable of realizing extension and retraction of a sound box. Specifically, the flat display device is a liquid crystal display television, which includes a body 10, a guide rail system 20 arranged on the body 10, and a trolley system 30 having a traveling track constrained by the guide rail system 20. The trolley system 30 is configured to connect a sound box 40 and drive the sound box 40 to move so that the sound box 40 can be extended or retracted.

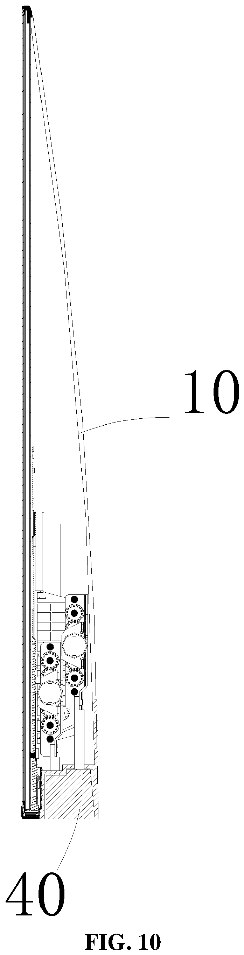

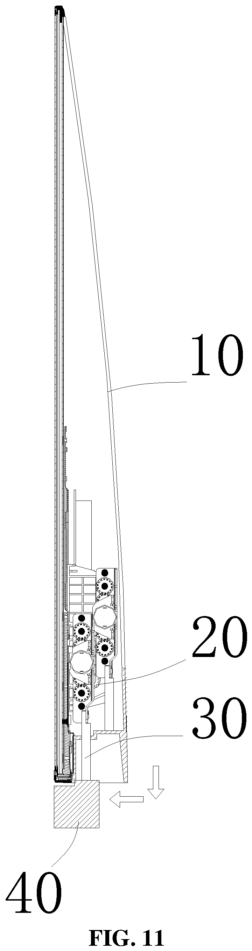

The body 10 may be formed by matchingly joining a front housing in which a screen is mounted, with a rear housing, and electronic components such as a backlight module are accommodated in a space between the front housing and the rear housing. In an embodiment of the present application, the guide rail system 20 may be arranged inside the body 10, i.e., installed in the space between the front housing and the rear housing. Referring to FIGS. 10 and 11, the sound box 40 can be extended out of or retracted into the space. In other words, the sound box 40 can be extended out of the body 10 or retracted into the body 10. Therefore, the sound box 40 can sound forwards when in use; while the sound box 40 is a hidden sound box when not in use, and cannot be seen from both the front and the rear of the liquid crystal display television. In other embodiments of the present application, the guide rail system 20 may also be arranged on the back of the body 10. In this way, when the liquid crystal display television works, the sound box 40 can be extended out of the body 10. When the liquid crystal display television does not work, the sound box 40 is retracted to the back of the body 10. At this moment, the sound box 40 cannot be seen from the front of the liquid crystal display television. In addition, the back of the liquid crystal display television is generally opposite to a wall and does not influence the appearance experience of a user.

Referring to FIG. 8, in an embodiment of the present application, the sound box 40 is configured to be extendable out of the bottom of the body 10 and to move below a screen 110. It can be understood that the sound box extending and retracting structure and the sound box 40 are installed at a lower portion of the entire liquid crystal display television. In other embodiments of the present application, the sound box extending and retracting structure and the sound box 40 may also be installed on one or both of two sides of the liquid crystal display television, or on a top of the liquid crystal display television. Therefore, the sound box 40 may also be configured to be extended out of the side or the top of the liquid crystal display television.

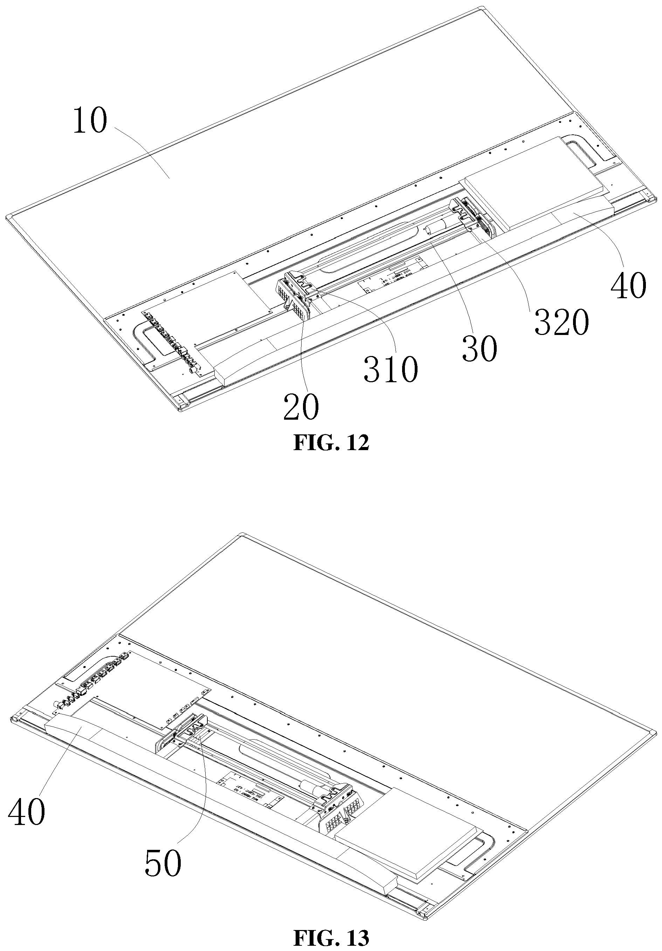

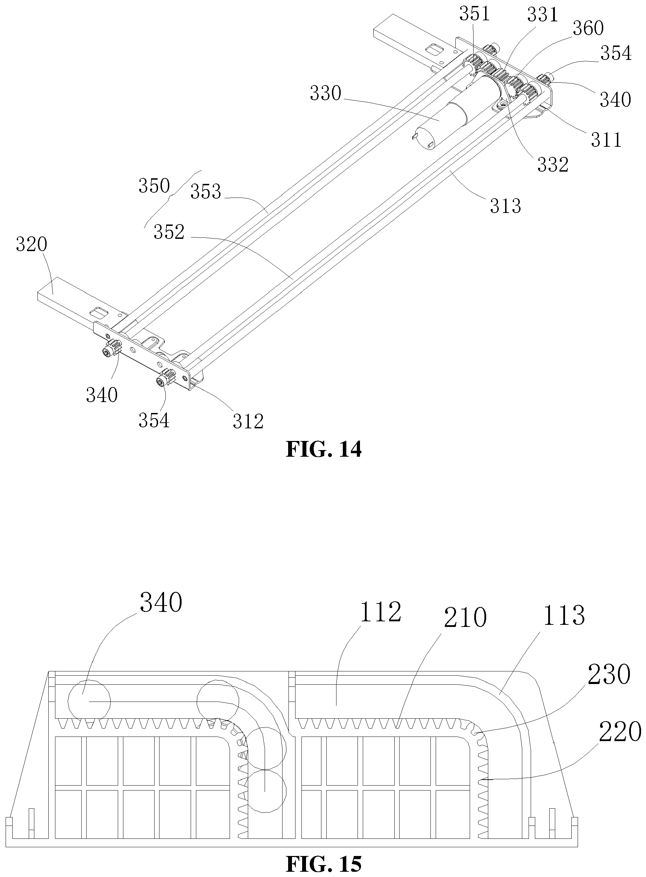

Referring to FIGS. 12 and 14, the sound box 40 is connected to a trolley 310 through a sound box connecting support 320. Therefore, a movement track of the trolley system 30 is synchronously embodied on the sound box 40. For example, the sound box 40 may be fixed to the sound box connecting support 320 by screws. An internal small hole may be formed in the sound box connecting support 320 so that a drive signal wire required by the sound box 320 penetrates into the sound box 40.

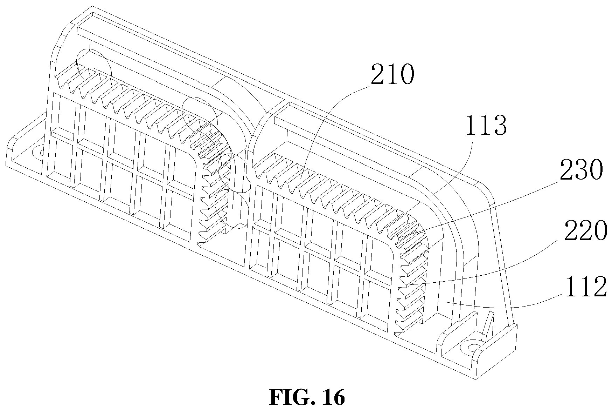

In an embodiment of the present application, the guide rail system 20 is arranged inside the body 10. Referring to FIGS. 15 and 16, the guide rail system 20 includes a first drive guide rail 210 and a second drive guide rail 220 connected with each other. A guide direction of the first drive guide rail 210 and a guide direction of the second drive guide rail 220 are perpendicular to each other. In addition, referring to FIGS. 12 and 14, the trolley system 30 includes a trolley support 310, a sound box connecting support 320 fixedly connected to the trolley support 310, a drive motor 330 installed on the trolley support 310, and drive wheels 340 driven to rotate by an output end of the drive motor 330. Herein, the drive wheels 340 drive the trolley support 310 to travel along a path defined by the first drive guide rail 210 and the second drive guide rail 220.

When the body 10 is placed at an angle as shown in FIGS. 8 to 11, i.e. in a placing posture when the liquid crystal display television normally works, the first drive guide rail 210 is arranged in a height direction, i.e. a vertical direction, of the body 10, and the second drive guide rail 220 is arranged horizontally. In this case, the guide direction of the first drive guide rail 210 is parallel to the screen 110, and the guide direction of the second drive guide rail 22 is perpendicular to the screen 110. Therefore, when the liquid crystal display television normally works, as shown in FIG. 11, the trolley system 30 may drive the sound box 40 to move vertically downwards, then move horizontally forwards, and finally extend out of inside of the body 10, and the sound box 40 is flush with the screen 110, as shown in FIG. 9, so that sound can be produced forwards. When the liquid crystal display television does not work, as shown in FIGS. 9 and 10, the trolley system 30 may drive the sound box 40 to automatically retract into inside of the body 10. The drive motor 330 is a forward and reverse rotation motor. The movement direction of the trolley system 30 during the forward rotation is just opposite to the movement direction of the trolley system 30 during the reverse rotation, so that the trolley system 30 can reciprocate. A drive signal for the trolley system 30 to travel may be controlled by a function key on a liquid crystal display television device or the signal may be sent by a control device (e.g. remote control). The signal may be an infrared, radio frequency or Bluetooth signal. In addition, the traveling signal of the trolley system 30 may also be automatically controlled by the liquid crystal display television. For example, a built-in software of the liquid crystal display television may automatically extend or retract the sound box as required. When the liquid crystal display television is turned on or turned on for a period of time, the drive motor 330 of the trolley system 30 rotates forwardly or reversely according to a control signal to finally realize automatic extension or retraction of the sound box 40. A control circuit board having a control chip for controlling the operation of the drive motor 330 may then be arranged in an internal space of the body 10.

Therefore, according to the flat display device and the sound box extending and retracting structure of the flat display device of the above embodiment of the present application, the sound box 40 can move vertically downwards and then horizontally forwards by using the guide rail system 20, and forward sounding can be realized. Meanwhile, the forward movement of the sound box 40 requires less space than the oblique forward movement in the conventional art. In addition, compared with an up-down reciprocating extending and retracting structure, the sound box 40 of the above embodiment can be adjusted to a position close to the front of the screen 110 while producing sound forwards, to make the appearance simple and neat.

According to some embodiments of the present application, as shown in FIG. 13, the interior or back of the body 10 may also be provided with a position sensor 50. The position sensor is configured to detect the movement track of the trolley system 30. For example, the movement track of the sound box connecting support 320 is detected by the position sensor 50. When the sound box connecting support 320 moves so that the sound box 40 is in a front position (i.e. working position thereof), the position sensor feeds back a signal to the control circuit board so as to control the circuit board to control the drive motor 330 to stop running. In other embodiments of the present application, the movement track of the trolley system 30 may also be controlled by setting running parameters of the drive motor 330. For example, according to the movement track, the number of turns for which the drive motor 330 may rotate forwardly or reversely can be set in advance, and the drive motor 330 automatically stops running after rotating forwardly or reversely for a predetermined number of turns. The position sensor may be a touch or non-touch sensor.

According to some embodiments of the present application, referring to FIGS. 15 and 16, the drive wheel 340 is a drive gear fixed to a drive shaft 350, and both the first drive guide rail 210 and the second drive guide rail 220 are racks. In this way, the first drive guide rail 210 and the second drive guide rail 220 define the traveling track of the drive wheel 340 through a tooth structure, which has a good stability, while providing a stronger reverse thrust to the drive wheel 340.

Further, in some embodiments of the present application, as shown in FIG. 14, a driving gear 331 is fixed to the output end of the drive motor 330, the trolley system 30 further includes a drive shaft 350 rotatably installed on the trolley support 310, and driven gears 351 are fixed to the drive shaft 350. The torque transmission between the drive motor 330 and the drive wheel 340 is realized by the driving gear 331, the driven gear 351, and the drive shaft 350. Specifically, the output end of the drive motor 330 drives the driving gear 331 to rotate, the driving gear 331 drives the driven gear 351 to rotate, the driven gear 351 drives the drive shaft 350 to synchronously rotate, and the drive shaft 350 drives the drive wheel 340 to rotate. According to the design, power is reliably transmitted through a gear mechanism, the structure is compact, and a transmission ratio of the gear mechanism can be flexibly designed according to practical requirements. In other embodiments of the present application, the torque transmission between the drive motor 330 and the drive wheel 340 may also be realized by other structures. For example, belt pulleys are arranged at the output end of the drive motor 330 and on the drive shaft 350, respectively, and the torque is transmitted by using belts.

Further, in some embodiments of the present application, referring to FIGS. 14, 15, and 16 together, an end of the drive shaft 350 is further provided with a limiting member 354, and the guide rail system 20 further includes a limiting groove 112 which is provided on the body 10 and constrains the traveling track of the limiting member 354. The guide path of the limiting groove 112 coincides with the guide path of the guide rail system 20. In this way, as shown in FIGS. 15 and 16, when the drive wheel 340 travels along the first drive guide rail 210 and the second guide rail 220, the limiting member 354 on the drive shaft 350 also travels under the constraint of the limiting groove 112, thereby improving the stability of travel of the entire trolley system 30 without being deflected.

The limiting member 354 is configured to be able to slide in the limiting groove 112. Preferably, the limiting member 354 is a bearing. The bearing has radial and axial dimensions, thereby limiting other degrees of freedom of the trolley system 30 except for the movement direction. In addition, the bearing has less friction force when sliding in the limiting groove 112, so that the sliding is smoother and the noise is less. In addition, the limiting member 354 is also configured to axially limit the drive wheel 340.

The limiting groove 112 may be formed directly on the body 10, e.g. on the rear housing of the body 10. In addition, in view of simplifying the forming process of the body 10, the limiting groove 112 may be detachably coupled to the body 10, and the limiting groove and the body may be snap-fittingly engaged with each other or by a fastener connected with each other. In the present embodiment, referring to FIG. 16, a rib plate 113 is installed on the body 10, and the rib plate 113, together with bases of the first guide rail 210 and the second guide rail 220, forms the limiting groove 112.

Further, in some embodiments of the present application, as shown in FIG. 14, the trolley system 30 further includes transition gears 360 installed on the trolley support 310, and the driving gear 331 transmits torque to the driven gear 351 through the transition gear 360. By providing the transition gear 360, it is possible to increase the transmission distance between the output end of the drive motor 330 and the driven gear 351 without using a gear having a large diameter, thereby facilitating the arrangement of elements inside the body 10.

In some embodiments of the present application, referring to FIG. 14, the trolley support 310 includes a first support 311, a second support 312, and a plurality of middle connecting rods 313 integrally connecting the first support 311 with the second support 312. The drive shaft 350 includes a first drive shaft 352 and a second drive shaft 353 which are arranged side by side, two ends of the first drive shaft 352 are installed on the first support 311 and the second support 312 respectively, two ends of the second drive shaft 353 are installed on the first support 311 and the second support 312 respectively, each of two ends of the first drive shaft 352 and each of two ends of the second drive shaft 353 are provided with respective drive wheels 340, and each are provided with one first guide rail 210 and one second guide rail 220 correspondingly. In other words, referring to FIGS. 15 and 16, taking a right end of the first drive shaft 352 and a right end of the second drive shaft 353 as an example, two guide rail systems 20 are disposed in an up and down arrangement manner. Each guide rail system 20 includes the first drive guide rail 210 and the second drive guide rail 220. A similar case is applied to a left end of the first drive shaft 352 and a left end of the second drive shaft 353. Therefore, in some embodiments of the present application, a dual-drive shaft drive mode is used, two ends of the first drive shaft 352 and two ends of the second drive shaft 353 are each constrained by the drive guide rails, and the traveling tracks are guided by the drive guide rails, so that the stability of the system is good. It can be understood that the number of drive shafts and drive gears may be increased as required in practice.

Further, as shown in FIG. 14, the drive motor 330 is located between the first drive shaft 352 and the second drive shaft 353. In this way, the space between the first drive shaft 352 and the second drive shaft 353 is sufficiently utilized, which is conducive to a compact structure. The drive motor 330 is installed to the first support 311 through a motor support 332.

According to some embodiments of the present application, referring to FIGS. 15 and 16, the first drive guide rail 210 and the second drive guide rail 220 are connected and transitioned to each other through an arc-shaped guide rail 230. Specifically, the first drive guide rail 210 and the second drive guide rail 220 are connected and transitioned to each other by the arc-shaped guide rail 230 and form an arc-shaped guide structure. The trolley support 310 may move both vertically and horizontally along the arc-shaped guide structure. As shown in FIGS. 5 and 16, when the first drive guide rail 210 and the second drive guide rail 220 are both racks, the arc-shaped guide rail 230 is an arc-shaped rack, and the first drive guide rail 210, the second drive guide rail 220 and the arc-shaped guide rail 230 are integrally a substantially L-shaped rack. A final movement path of the trolley system 30 is also in a shape of a letter "L", thereby realizing the requirement of moving the sound box 40 vertically first and then horizontally. In addition, an angle between the first drive guide rail 210 and the second drive guide rail 220 is not limited to be vertical. For example, the first drive guide rail and the second drive guide rail are at an acute angle or an obtuse angle, so that as long as the first drive guide rail 210 is parallel to the screen, the sound box 40 may move vertically first and then obliquely forwards and horizontally. It is also possible that the first drive guide rail 210 and the second drive guide rail 220 are annular such that the path when the sound box 40 is extended and the path when it is retracted form just a circle.

In other embodiments of the present application, the first drive guide rail 210 and the second drive guide rail 220 are positioned in close proximity to each other, but without a connector. When the drive wheel 340 moves on the first drive guide rail 210 and reaches the end of the first drive guide rail 210, it is possible to guide the traveling track of the drive shaft 350 using only the limiting groove 112. At this moment, since the rotation diameter is large, when the drive wheel 340 rotates, it may be still directly transitioned to be in contact with the end of the second drive guide rail 220 without a transition connector.

The various technical features of the above embodiments can be combined in any combination, and in order to simplify the description, all possible combinations of the various technical features of the above embodiments are not described. However, as long as there is no conflict between the combinations of these technical features, they should be considered to fall within the scope of the present specification.

The above embodiments only describe several implementations of the present application more specifically and in more detail, but cannot be thus understood as limitation to the patent scope of the present application. It is to be pointed out that those of ordinary skill in the art may also make several variations and improvements without departing from the concept of the present application. These variations and improvements fall within the scope of protection of the present application. Therefore, the scope of protection of the present application should be determined by the appended claims.

## Claims

1. A sound box extending and retracting structure for a flat display device, the structure comprising:
a guide rail system, arranged on a body of the flat display device and comprising a first drive guide rail and a second drive guide rail which are connected with each other, a guide direction of the first drive guide rail being disposed at an angle to a guide direction of the second drive guide rail; and
a trolley system having a traveling track constrained by the guide rail system, the trolley system comprising a trolley support, a sound box connecting support fixedly connected to the trolley support, a drive motor installed on the trolley support, and a drive wheel driven to rotate by an output end of the drive motor, the drive wheel driving the trolley support to travel along a path defined by the first drive guide rail and the second drive guide rail.

2. The sound box extending and retracting structure according to claim 1, wherein the drive wheel is a drive gear, and both the first drive guide rail and the second drive guide rail are racks.

3. The sound box extending and retracting structure according to claim 1, wherein the guide direction of the first drive guide rail and the guide direction of the second drive guide rail are perpendicular to each other, or the first drive guide rail and the second drive guide rail jointly form an annular guide path.

4. The sound box extending and retracting structure according to claim 1, wherein a driving gear is fixed to the output end of the motor, and wherein the trolley system further comprises a drive shaft rotatably installed on the trolley support, and a driven gear is fixed to the drive shaft.

5. The sound box extending and retracting structure according to claim 4, wherein the trolley system further comprises a transition gear installed on the trolley support, and the driving gear transmits a torque to the driven gear through the transition gear.

6. The sound box extending and retracting structure according to claim 4, wherein an end of the drive shaft is further provided with a limiting member, and the guide rail system further comprises a limiting groove provided on the body and constraining a traveling track of the limiting member.

7. The sound box extending and retracting structure according to any one of claims 4 to 6, wherein the trolley support comprises a first support, a second support and a plurality of middle connecting rods integrally connecting the first support with the second support, the drive shaft comprises a first drive shaft and a second drive shaft which are arranged side by side, two ends of the first drive shaft are installed on the first support and the second support respectively, two ends of the second drive shaft are installed on the first support and the second support respectively, and the two ends of the first drive shaft and the two ends of the second drive shaft are provided with respective drive wheels.

8. The sound box extending and retracting structure according to claim 1, wherein the first drive guide rail and the second drive guide rail are connected and transitioned to each other through an arc-shaped guide rail.

9. A flat display device, comprising the sound box extending and retracting structure according to any one of claims 1 to 8, wherein the guide direction of the first drive guide rail is parallel to a screen of the flat display device, and the guide direction of the second drive guide rail is perpendicular to the screen.

10. The flat display device according to claim 9, wherein the guide rail system is installed inside the body of the flat display device, the sound box connecting support is connected with a sound box, and the sound box is able to be extended out of and retracted into the body.
